# EUROPÄISCHE PATENTSCHRIFT

(11) **EP 0 678 427 B1**
(45) Veröffentlichungstag und Bekanntmachung des Hinweises auf die Patenterteilung: **24.09.1997**
(21) Anmeldenummer: 95105035.0
(22) Anmeldetag: 04.04.1995
(51) Int. Cl.: B60R 22/46

(54) **Gurtstraffer**
Belt tensioner
Tendeur de ceinture

(30) Priorität: 22.04.1994 DE 4414193
(43) Veröffentlichungstag der Anmeldung: 25.10.1995
(73) Patentinhaber: TAKATA (EUROPE) VEHICLE SAFETY TECHNOLOGY GmbH, D-89081 Ulm (DE)
(72) Erfinder: Steffan, Hermann, Dr., A-8010 Graz (AT); Emmert, Erik, D-89073 Ulm (DE); Kopetzky, Robert, D-89173 Lonsee (DE)
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)

(56) Entgegenhaltungen:
- EP-A- 0 581 288
- BE-A- 843 540
- DE-A- 2 505 626

## Beschreibung

Die Erfindung betrifft einen Gurtstraffer bei Sicherheitsgurtanordnungen in Kraftfahrzeugen nach den Oberbegriffen der Patentansprüche 1 und 4.

Da die Rückzugskraft eines mit einer Rückzugsfeder ausgestatteten Gurtaufrollmechanismus aus Komfortgründen sehr gering ist und im allgemeinen nur zwischen 2 und 22 N beträgt, liegen von dem Insassen eines Fahrzeuges angelegte Sicherheitsgurte im allgemeinen nur relativ lose an dessen Körper an. Trägt der Insasse zudem noch eine voluminösere Kleidung, beispielsweise einen dicken Mantel, ist nicht mehr gewährleistet, daß der Sicherheitsgurt bei einem Unfall ausreichend straff am Körper des Benutzers anliegt. Aus diesem Grunde besteht ein Bedürfnis, den Gurt beim Auftreten eines Unfalles schlagartig so zu straffen, daß der Insasse sicher und ohne großes Spiel vom Gurtsystem festgehalten wird.

Daher sind Gurtstrafferanordnungen erforderlich, die den Gurt bei einem Unfall mit einer hohen Kraft über einen hinreichenden Weg straffen. Sie sollen gleichzeitig jedoch kompakt und preiswert sowie nach einer unfallbedingten Straffung lösbar sein, so daß der Gurt nach einem kleineren Unfall beispielsweise für die Fahrt des Wagens zu einer Werkstatt noch angelegt werden kann.

Es ist schon bekannt (DE-OS 42 21 398), das am Chassis befestigte Gurtschloß bei einem Unfall durch eine Straffervorrichtung schlagartig um ein gewisses Stück in Richtung des Fahrzeugchassis zu bewegen, um so die für ein enges Anliegen des Sicherheitsgurtes am Körper des Insassen erforderliche Gurtverkürzung herbeizuführen. Weiter sind bereits Gurtstraffer bekannt, die üblicherweise pyrotechnische Treibladungen vewenden, um die Gurtrolle zur Straffung des Gurtes zu drehen. Die bekannten Straffer haben jedoch insbesondere den Nachteil, entweder nur über einen kurzen Weg zu straffen (EP-0 059 643 B1, DE-25 05 626 A1, US-A-24 77 907) oder sie sind nicht ausreichend kompakt (DE 35 31 856 A1).

Gurtstraffer nach den Oberbegriffen der Ansprüche 1 und 4 sind bereits aus der EP 0 581 288 A1 bekannt.

EP-A- 0 581 288 beschreibt einen Gurtstraffer mit einem am Fahrzeugchassis befestigten, vorzugsweise mit einer Rückzugsfederanordnung und Beschleunigungs-Feststellvorrichtung versehenen Gurtaufrollmechanismus, einem in Gurtaufrollrichtung arbeitenden Antrieb für den Gurtaufrollmechanismus und einen Beschleunigungssensor, welcher auf bei einem Unfall auftretende Beschleunigungen anspricht und mit dem Antrieb in Auslöseverbindung steht, derart, daß beim Auftreten einer unfallbedingten Beschleunigung der Antrieb ausgelöst wird und dadurch den Gurtaufrollmechanismus den Gurt schlagartig um ein vorbestimmtes Stück, das ausreicht, den Gurt fest an dem von ihm gehaltenen Insassen anzulegen, einrollt, wobei der Antrieb aufweist
eine beim Ansprechen des Beschleunigungssensors auslösbare Druckquelle, insbesondere pyrotechnische Ladung, welche bei Auslösung in einem Druckraum schlagartig einen hohen Druck aufbaut,
einen an seinem Anfang mit dem Druckraum verbundenen oder verbindbaren, zumindest annähernd druckdicht verschlossenen, im wesentlichen kreisförmigen Laufraum, in dem
ein Kräfte übertragendes Dichtmittel angeordnet ist, welches
   den Laufraum in Umfangsrichtung in zwei druckdicht voneinander getrennte Räume unterteilt, von denen einer druckmäßig mit dem Druckraum verbunden ist und welches
   spätestens unmittelbar nach der Auslösung
      über den Umfang des Laufraumes beweglich ist,
      radial innen mit einer mit dem Gurtaufrollmechanismus drehfest gekuppelten oder spätestens unmittelbar nach der Auslösung drehfest kuppelbaren zentralen Nabe in Eingriff steht,
      radial außen mit einer in Umfangsrichtung feststehenden kreisförmigen Innenwand des Gehäuses in einer abdichtenden Beziehung steht und
      vor der Auslösung nahe einer sich zwischen der Nabe und der Innenwand erstreckenden Druckwand angeordnet ist und beim Auftreten von Druck im Druckraum nach Auslösung der Druckquelle unter Bewegung entlang der feststehenden Innenwand und Drehung der mit dem Gurtaufrollmechanismus drehfest gekuppelten zentralen Nabe den Laufraum um eine erhebliche Winkelstrecke durchläuft, wobei
   die axialen Stirnseiten des Kräfte übertragenden Dlchtmittels der Nabe und der Innenwand mit Stirnwänden, von denen vorzugsweise eine ein abnehmbarer Deckel ist, im dichtenden Eingriff stehen.

Ein generelles Problem bei dieser Gattung von Gurtstraffern besteht darin, daß der Winkelbewegungsbereich der Nabe dadurch begrenzt ist, daß das Dichtmittel im Falle der Auslösung der pyrotechnischen Ladung nur etwas weniger als eine ganze Umdrehung ausführen kann. Bei einer zu geringen Winkelbewegung der Nabe kann aber der erforderliche Straffereffekt am Sicherheitsgurt nicht mehr im erwünschten Ausmaß erzielt werden.

Das Ziel der vorliegenden Erfindung besteht darin, einen Gurtstraffer nach den Oberbegriffen der Ansprüche 1 oder 4 zu schaffen, bei welchem die den Gurtaufrollmechanismus beaufschlagende Nabe im Falle der Auslösung der pyrotechnischen Ladung einen größeren Drehwinkelbereich als etwas weniger als 360° zurücklegen kann.

Nach einer ersten Ausführungsform wird diese Aufgabe durch die Merkmale des kennzeichnenden Teils des Anspruches 1 gelöst. Eine vorteilhafte Weiterbildung dieser Ausführungsform entnimmt man Anspruch 2.

Der Grundgedanke dieser Ausführungsform der Erfindung besteht darin, daß die Druckwand beweglich ausgebildet ist, derart, daß sie sich beim Umlaufen des Radialkolbens in gleicher Drehrichtung, jedoch mit geringerer Drehgeschwindigkeit verschiebt. Wenn der Radialkolben einen ganzen Umlauf zurückgelegt hat, ist die Druckwand je nach den Durchmessern der einzelnen Zahnräder bereits um ein erhebliches Winkelstück weiter gewandert, so daß auch der Radialkolben weiter um die Achse der Anordnung umlaufen kann, bevor er schließlich an die in Umfangsrichtung bewegliche Druckwand, die als frei bewegliches Planetenzahnrad ausgebildet ist, von hinten anstößt.

Durch geeignete Durchmesserwahl für die einzelnen Zahnräder bzw. Zahnkränze können so Winkelbewegungen des Radialkolbens verwirklicht werden, wie sie im Anspruch 3 definiert sind.

Eine weitere Ausführungsform der Erfindung ist durch die Merkmale des kennzeichnenden Teils des Anspruches 4 definiert. Eine vorteilhafte Weiterbildung dieses Ausführungsbeispiels ist im Anspruch 5 angegeben.

Das Wesen dieser Ausführungsform besteht darin, daß das Außenzahnrad, das Ritzel und die außenverzahnte Nabe ein kompaktes Übersetzungsgetriebe bilden, wobei die Durchmesserverhältnisse so gewählt werden können, daß die Nabe deutlich mehr als eine ganze Umdrehung ausführen kann, obwohl der Radialkolben wegen des in diesem Fall in Umfangsrichtung feststehenden Ritzels nur einen Drehwinkel von weniger als 360° überstreichen kann.

Auf diese Weise ist es ohne weiteres möglich, für die Nabe einen Drehwinkelbereich nach Anspruch 6 zu erzielen.

Die Erfindung wird im folgenden beispielsweise anhand der Zeichnung beschrieben; in dieser zeigt
- Figur 1: eine schematische, teilweise geschnittene und auseinandergezogene perspektivische Ansicht einer ersten Ausführungsform des erfindungsgemäßen Gurtstraffers,
- Figur 2: eine Ansicht des Gegenstandes der Fig. 1 in Richtung des Pfeiles II in zusammengebautem Zustand,
- Figur 3: eine vergrößerte, senkrecht zur Drehbahn geschnittene Darstellung des Antriebes des Gurtstraffers nach der Figur 1 und 2 bei Beginn einer Auslösung,
- Figur 3a: die gleiche Schnittdarstellung wie Figur 3, jedoch bei einer fortgeschrittenen Winkelbewegung des Radialkolbens,
- Figur 4: eine vergrößerte, senkrecht zur Drehachse geschnittene Darstellung einer weiteren Ausführungsform für den Antrieb des Gurtstraffers nach den Figuren 1 und 2 bei Beginn einer Auslösung und
- Figur 4a: die gleiche Schnittansicht wie Figur 4 bei einer fortgeschrittenen Winkelbewegung des Radialkolbens.

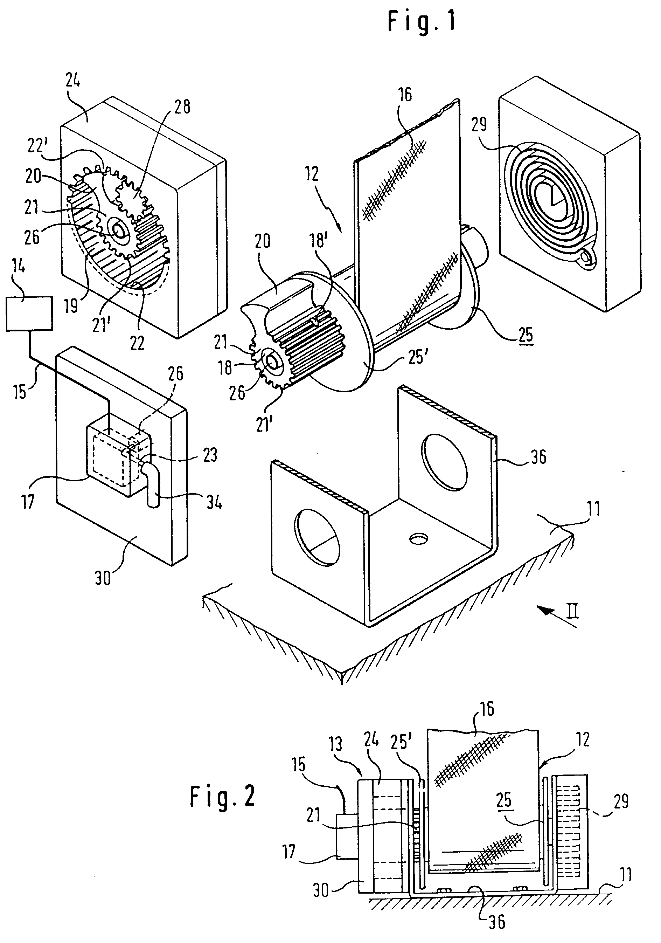

Nach den Figuren 1 und 2 ist ein Gurtaufrollmechanismus 12 mittels einer Halterung 36 am Chassis 11 eines Kraftfahrzeuges befestigt. Der Gurtaufrollmechanismus 12 weist eine Gurtrolle 25 auf, auf welche mittels einer an einem Ende der Halterung 36 angeordneten Spiralfederanordnung 29 ein Sicherheitsgurt 16 soweit aufgerollt werden kann, daß er mit einer Zugkraft zwischen 2 und 22 N am Körper eines Insassen, der den Sicherheitsgurt 16 angelegt hat, zur Anlage kommt.

An der von der Spiralfederanordnung 29 abgewandten Stirnseite weist der Gurtaufrollmechanismus 12 einen Flansch 25' und eine mit einer Außenverzahnung 21' versehene Nabe 21 auf, welche axial in ein durch einen Deckel 30 abgeschlossenes Gehäuse 24 eines Antriebs 13 eingreift. Der Anschaulichkeit halber ist je Nabe 21 in Figur 1 außer in ihrer Position innerhalb des Gehäuses 24 auch noch in seiner koaxialen Anordnung an der Gurtrolle 25 - also doppelt - gezeigt.

Im Fahrzeug ist an geeigneter Stelle ein in Fig. 1 angedeuteter Beschleunigungssensor 14 befestigt, der über eine Auslöseverbindung 15 mit einer am Deckel 30 angeordneten Druckquelle 17 verbunden ist, die zweckmäßigeweise durch eine pyrotechnische Ladung realisiert ist, welche bei Auftreten eines unfallbedingten Beschleunigungssignals am Ausgang des Beschleunigungssensors 14 gezündet wird. Zwischen der Nabe 21 und der Gurtaufnahmerolle 25 ist zweckmäßigerweise noch eine nicht dargestellte Kupplung vorgesehen, welche normalerweise ausgerückt ist, damit die Gurtaufnahmerolle 25 sich bei den normalen Aus- und Einzugsbewegungen des Gurtes 16 unter Einwirkung des Fahrzeuginsassen bzw. der Spiralfederanordnung 29 frei drehen kann. Bei einem Unfall wird diese Kupplung schlagartig eingerückt, was z. B. auch durch ein ruckartiges Ausziehen des Gurtes 16 herbeigeführt werden kann.

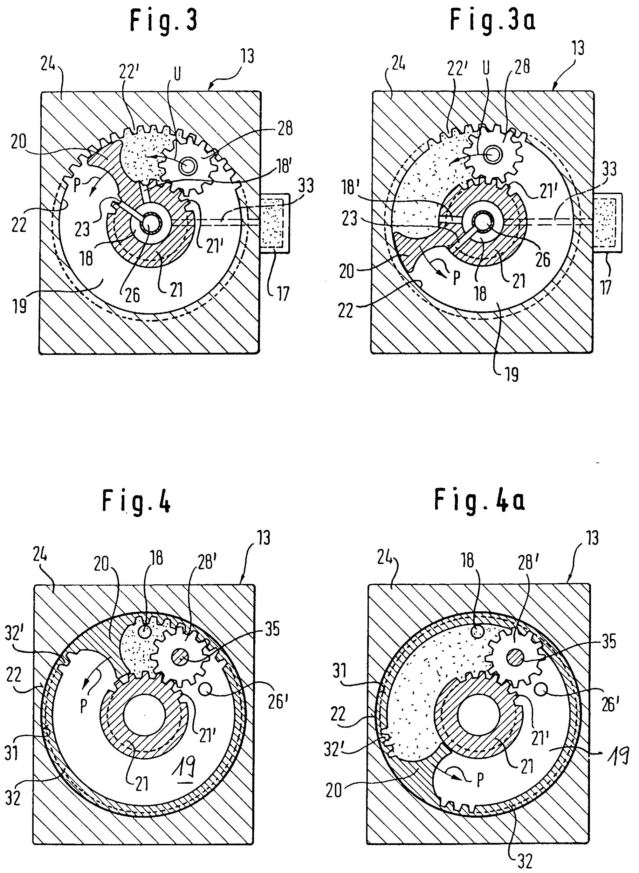

Nach den Figuren 1 und 3 erstreckt sich von der drehbar angeordneten Nabe 21 radial nach außen ein Radialkolben 20 bis zur kreisförmigen feststehenden Innenumfangswand 22 des Gehäuses, welche mit einer Innenverzahnung 21' versehen ist. Der Radialkolben 20 ist radial außen in Umfangsrichtung in der dargestellten Weise etwas verbreitert, um zusammen mit den Zähnen der Innenverzahnung 21' eine Art Labyrintdichtung zu bilden.

In Drehrichtung (Pfeil p) gesehen unmittelbar hinter dem Radialkolben 20 ist nach Figur 3 zwischen der Innenverzahnung 21' der Innenwand 22 und der Außenverzahnung 21' der Nabe 21 ein Planetenzahnrad 28 frei drehbar und in Umfangsrichtung verschiebbar angeordnet.

Zwischen der Nabe 21 und der Innenwand 22 erstreckt sich in Umfangsrichtung über 360° ein Laufraum 19, innerhalb dessen sich der Radialkolben 20 und das Planetenzahnrad 28 in Umfangsrichtung bewegen können.

Die Nabe 21 ist mit zwei konzentrischen koaxialen Kanälen ausgerüstet, und zwar mit einem inneren Luftrückführkanal 26 und einem äußeren Druckraum 18, welcher über eine Stichleitung 18' mit demjenigen Teil des Laufraums 19 in Strömungsverbindung steht, welcher sich in Drehrichtung p gesehen hinter dem Radialkolben 20 aber vor dem Planetenzahnrad 28 befindet.

Der sich in Drehrichtung p gesehen vor dem Radialkolben 20 befindliche Teil des Laufraums 19 ist über einen sich im wesentlichen radial erstreckenden Entlüftungskanal 23 mit dem innerhalb des Druckraum 18 Rückführkanal 26 strömungsmäßig verbunden.

Die beispielsweise aus einer pyrotechnischen Ladung bestehende Druckquelle 17 ist in den Figuren 3, 3a nur schematisch angedeutet. Sie ist über eine in den Figuren 3 und 3a nur gestrichelt angedeutete Druckleitung 33 mit dem Druckraum 18 verbunden.

Nach Figur 1 münden die zueinander koaxialen Kanäle 18, 26 axial im Deckel 30, wo der Druckraum 18 dicht an den die Ladung 17 enthaltenden Raum bzw. die Druckleitung 33 angeschlossen ist, während der Rückführkanal 26 in geeigneter Weise dicht an ein Entlüftungsrohr 34 angeschlossen ist.

Die Arbeitsweise der beschriebenen Ausführungsform ist wie folgt:

Die Ruheposition des Antriebs 13 ist in Figur 3 dargestellt. Wenn jetzt der Sensor 14 (Fig. 1) eine unfallbedingte Beschleunigung feststellt, zündet er über die Auslöseverbindung 15 die pyrotechnische Ladung 17, wodurch sich im Druckraum 18 ein Druck aufbaut, der durch die Stichleitung 18' in den Teil des Laufraumes 19 gelangt, der sich in Drehrichtung p gesehen hinter dem Radialkolben 20 befindet. Dadurch wird sowohl auf den Radialkolben 20 als auch auf das Planetenzahnrad 28 in entgegengesetzten Umfangsrichtungen ein Druck ausgeübt. Aufgrund der kinematischen Verhältnisse ist jedoch das durch den Radialkolben 20 auf die Nabe 21 ausgeübte Drehmoment größer als dasjenige, welches das Planetenzahnrad 28 in entgegengesetzter Umfangsrichtung wirksam werden läßt. Aus diesem Grunde wird die Nabe 21 entgegen den Uhrzeigersinn in Drehung versetzt. Ein späteres Stadium der Drehbewegung ist in Figur 3a dargestellt. Aus dem Vergleich der Figuren 3 und 3a erkennt man, daß bei einer Umlaufbewegung des Radialkolbens 20 in Richtung des Pfeiles p auch das Planetenzahnrad 28 sich in Umfangsrichtung U drehend verschiebt. Allerdings verläuft die Umlaufbewegung des Planetenzahnrades 28 um die Achse der Nabe 21 mit einer geringeren Geschwindigkeit als die des Radialkolbens 20.

Wenn der Radialkolben 20 einen vollen 360°-Umlauf vollzogen hat, ist das Planetenzahnrad 28 etwa um 180° gegenüber der Ausgangsposition von Figur 3 um die Achse der Nabe 21 herumgelaufen, so daß der Radialkolben 20 seine Umlaufbewegung zunächst ungehindert fortsetzen kann. Erst nach einer Drehbewegung über 450° bis 720° stößt der Radialkolben 20 schließlich von hinten an das Planetenzahnrad 28 an, so daß ein weiterer Umlauf nicht möglich ist.

Durch geeignete Dimensionierung der Durchmesser der drei miteinander zusammenarbeitenden Verzahnungen 21', 28, 22' kann erreicht werden, daß der Radialkolben 20 wesentlich mehr als einen ganzen Umlauf ausführen kann.

Beim Ausführungsbeispiel nach Figur 4 ist der Radialkolben 20 am Innenumfang eines hohlen Zahnrades 32 vorgesehen, dessen glatte Außenumfangswand 31 an der glatten Innenwand 22 eines entsprechenden kreisförmigen Hohlraumes im Gehäuse 24 gleitend anliegt. Innen am Zahnrad 32 ist in allen Bereichen außer dort, wo sich der Radialkolben 20 befindet, eine Innenverzahnung 32' vorgesehen.

Der Radialkolben 20 erstreckt sich radial nach innen bis zu einer Außenverzahnung 21' der Nabe 21, die - wie beim Ausführungsbeispiel nach den Figuren 1 bis 3a - drehbar gelagert ist und die Gurtaufnahmerolle 25 trägt (Fig. 1, 2).

Zwischen der Außenverzahnung 21' der Nabe 21 und dem Innenzahnkranz 22' des Zahnrades 32 erstreckt sich nach Fig. 4 ein Ritzel 28', welches frei drehbar auf einer Achse 35 sitzt, die fest am Gehäuse 24 angebracht ist. Im Gegensatz zum Ausführungsbeispiel nach den Figuren 3 und 3a ist also die Drehachse des Ritzels 28' in Umfangsrichtung am Gehäuse 24 festgelegt.

In Drehrichtung p gesehen vor dem Radialkolben 20 mündet an einer der Stirnseiten des Gehäuses 24 oder des Deckels 30 der Druckraum 18, so daß im Falle einer unfallbedingten Zündung der pyrotechnischen Ladung 17 zwischen dem Radialkolben 20 und dem Ritzel 28' ein Druck aufgebaut werden kann. Dieser übt auf den Radialkolben 20 eine Kraft in Drehrichtung p aus, so daß sich der Radialkolben 20 und das mit ihm ein Stück bildende Zahnrad 32 entgegen dem Uhrzeigersinn in Figur 4 zu drehen beginnen. Hierbei wird vom Innenzahnkranz 32' das Ritzel 28' zu einer Drehbewegung entgegen dem Uhrzeigersinn angetrieben, was wiederum die mit dem Ritzel 28' kämmende Nabe 21 veranlaßt, sich im Uhrzeigersinn zu drehen. Der Spalt zwischen dem radial inneren Ende des Radialkolbens 20 und den radial äußeren Spitzen der Außenverzahnung 21' wird so klein gehalten, daß durch diesen Spalt nur geringe oder gar keine Druckverluste entstehen.

In Drehrichtung p gesehen unmittelbar hinter dem Ritzel 28' befindet sich in einer der Stirnwände des Gehäuses 24 oder des Deckels 30 die Mündung eines Rückführkanals 26', durch den die beim Umlauf des Radialkolbens 20 verdrängte Luft nach außen abgeführt werden kann.

Figur 4 zeigt die Ruheposition des Antriebs 13 vor einer unfallbedingten Auslösung, Fig. 4a den bereits um ein Stück bewegten Radialkolben 20 nach einer Auslösung.

Wie man aus dem Vergleich der Figuren 4 und 4a erkennt, bleibt bei einer Drehung des Radialkolbens 20 entgegen dem Uhrzeigersinn das Ritzel 28' an der vorgesehenen Umfangsstelle, doch treibt es während der Umfangsbewegung des Radialkolbens 20 die Nabe 21 mit gegenüber der Drehzahl des Zahnrades 32 erhöhter Drehzahl in entgegengesetzter Richtung an.

Die Umlaufbewegung des Radialkolbens 20 ist beendet, wenn er von hinten an das in Umfangsrichtung feststehende Ritzel 28' anschlägt.

Durch geeignete Wahl der Durchmesser der drei Verzahnungen 21', 22' und 28' kann zwischen der Drehbewegung des Zahnrades 32 und derjenigen der Nabe 21 eine solche Übersetzung herbeigeführt werden, daß die Nabe 21 sich annähernd doppelt soweit dreht wie der Radialkolben 20.

Da beim Ausführungsbeispiel nach Fig. 4, 4a die Nabe 21 sich entgegengesetzt wie bei der Ausführungsform nach Fig. 3, 3a dreht, muß der Wickelsinn des Gurtes 16 (Fig. 1) und der Spiralfeder 29 entsprechend geändert werden.

### BEZUGSZEICHENLISTE

- 11: Fahrzeugchassis
- 12: Gurtaufrollmechanismus
- 13: Antrieb
- 14: Beschleunigungssensor
- 15: Auslöseverbindung
- 16: Gurt
- 17: Druckquelle
- 18: Druckraum
- 19: Laufraum
- 20: Radialkolben
- 21: Nabe
- 21': Außenverzahnung
- 22: Innenwand
- 22': Innenverzahnung
- 23: Entlüftungskanal
- 24: Gehäuse
- 25: Gurtrolle
- 25': Flansch
- 26: Rückführkanal
- 27: Deckel
- 28: Planetenzahnrad
- 28': Ritzel
- 29: Rückzugsfeder
- 30: Deckel
- 31: Umfangswand
- 32: Zahnrad
- 32': Innenverzahnung
- 33: Druckleitung
- 34: Entlüftungsrohr
- 35: Achse

## Patentansprüche

1. Gurtstraffer bei Sicherheitsgurtanordnungen in Kraftfahrzeugen mit einem am Fahrzeugchassis (11) befestigten, vorzugsweise mit einer Rückzugsfederanordnung (29) und Beschleunigungs-Feststellvorrichtung versehenen Gurtaufrollmechanismus (12), einem in Gurtaufrollrichtung arbeitenden Antrieb (13) für den Gurtaufrollmechanismus (12) und einen Beschleunigungssensor (14), welcher auf bei einem Unfall auftretende Beschleunigungen anspricht und mit dem Antrieb (13) in Auslöseverbindung (15) steht, derart, daß beim Auftreten einer unfallbedingten Beschleunigung der Antrieb (13) ausgelöst wird und dadurch der Gurtaufrollmechanismus (12) den Gurt schlagartig um ein vorbestimmtes Stück, das ausreicht, den Gurt (16) fest an dem von ihm gehaltenen Insassen anzulegen, einrollt, wobei der Antrieb aufweist
- eine beim Ansprechen des Beschleunigungssensors (14) auslösbare Druckquelle (17), insbesondere pyrotechnische Ladung, welche bei Auslösung in einem Druckraum (18) schlagartig einen hohen Druck aufbaut,
- einen an seinem Anfang mit dem Druckraum (18) verbundenen oder verbindbaren, zumindest annähernd druckdicht verschlossenen, im wesentlichen kreisförmigen Laufraum (19), in dem
- ein Kräfte übertragendes Dichtmittel (20) angeordnet ist, welches
-- den Laufraum (19) in Umfangsrichtung in zwei druckdicht voneinander getrennte Räume unterteilt, von denen einer druckmäßig mit dem Druckraum (18) verbunden ist und welches
-- spätestens unmittelbar nach der Auslösung
--- über den Umfang des Laufraumes (19) beweglich ist,
--- radial innen mit einer mit dem Gurtaufrollmechanismus (12) drehfest gekuppelten oder spätestens unmittelbar nach der Auslösung drehfest kuppelbaren zentralen Nabe (21) in Eingriff steht,
--- radial außen mit einer in Umfangsrichtung feststehenden kreisförmigen Innenwand (22) des Gehäuses (24) in einer abdichtenden Beziehung steht und
--- vor der Auslösung nahe einer sich zwischen der Nabe (21) und der Innenwand (22) erstreckenden Druckwand (28) angeordnet ist und beim Auftreten von Druck im Druckraum (18) nach Auslösung der Druckquelle (17) unter Bewegung entlang der feststehenden Innenwand (22) und Drehung der mit dem Gurtaufrollmechanismus (12) drehfest gekuppelten zentralen Nabe (21) den Laufraum (19) um eine erhebliche Winkelstrecke durchläuft, wobei
-- die axialen Stirnseiten des Kräfte übertragenden Dichtmittels (20) der Nabe (21) und der Innenwand (22) mit Stirnwänden (25', 30), von denen vorzugsweise eine ein abnehmbarer Deckel ist, in dichtenden Eingriff stehen,
dadurch **gekennzeichnet,**
daß
- das Dichtmittel ein an der Nabe (21) befestigter Radialkolben (20) ist, der sich bis dicht an die Innenwand (22) erstreckt und diese gar nicht oder allenfalls reibend berührt, daß
- die Innenwand rundum als Innenzahnkranz (22) ausgebildet ist, daß
- die Nabe (21) eine Außenverzahnung (21') aufweist, die über ein mit dem Innenzahnkranz (22) und der Außenverzahnung (21') kämmendes, frei drehbares und in Umfangsrichtung bewegbares die Druckwand bildendes Planetenzahnrad (28) mit dem Innenzahnkranz (22) in Eingriff steht, daß
- die Nabe (21) axial hohl ausgebildet ist und daß
- der Druckraum (18) durch einen Teil des axialen Hohlraums der Nabe (21) gebildet ist und - in Drehrichtung gesehen - hinter dem Radialkolben (20) und vor dem Planetenzahnrad (28) in den Laufraum (19) mündet.

2. Gurtstraffer nach Anspruch 1,
dadurch **gekennzeichnet,**
daß ein anderer Teil des axialen Hohlraumes der hohl ausgebildeten Nabe (21) als Rückführkanal (26) für die beim Umlauf des Radialkolbens (20) verdrängte Luft ausgebildet ist, welcher - in Drehrichtung gesehen - vor dem Radialkolben (20) in den Laufraum (19) mündet.

3. Gurtstraffer nach Anspruch 1 oder 2,
dadurch **gekennzeichnet,**
daß die Durchmesser des Innenzahnkranzes (22'), der Außenverzahnung (21') der Nabe (21) und des Planetenzahnrades (28) so gewählt sind, daß der Radialkolben (20) eine Winkelbewegung von 460° bis 720° ausführen kann.

4. Gurtstraffer bei Sicherheitsgurtanordnungen in Kraftfahrzeugen mit einem am Fahrzeugchassis (11) befestigten, vorzugsweise mit einer Rückzugsfederanordnung (29) und Beschleunigungsfeststellvorrichtung versehenen Gurtaufrollmechanismus (12), einem in Gurtaufrollrichtung arbeitenden Antrieb (13) für den Gurtaufrollmechanismus (12) und einem Beschleunigungssensor (14), welcher auf bei einem Unfall auftretende Beschleunigungen anspricht und mit dem Antrieb (13) in Auslöseverbindung (15) steht, derart, daß beim Auftreten einer unfallbedingten Beschleunigung der Antrieb (13) ausgelöst wird und dadurch der Gurtaufrollmechanismus (12) den Gurt (16) schlagartig um ein vorbestimmtes Stück, das ausreicht, den Gurt fest an den von ihm gehaltenen Insassen anzulegen, einrollt, wobei der Antrieb aufweist
- eine beim Ansprechen des Beschleunigungssensors (14) auslösbare Druckquelle (17), insbesondere pyrotechnische Ladung, welche bei Auslösung in einem Druckraum (18) schlagartig einen hohen Druck aufbaut,
- einen an seinem Anfang mit dem Druckraum (18) verbundenen oder verbindbaren, zumindest annähernd druckdicht verschlossenen, im wesentlichen kreisförmigen Laufraum (19), in dem
- ein Kräfte übertragendes Dichtmittel (20) angeordnet ist, welches
-- den Laufraum (19) in Umfangsrichtung in zwei druckdicht voneinander getrennte Räume unterteilt, von denen einer druckmäßig mit dem Druckraum (18) verbunden ist, und
-- welches spätestens unmittelbar nach der Auslösung
--- zumindest über den Umfang des Laufraumes (19) beweglich ist,
--- radial innen mit einer mit dem Gurtaufrollmechanismus (12) drehfest gekuppelten oder spätestens unmittelbar nach der Auslösung drehfest kuppelbaren zentralen Nabe (21) und
--- radial außen mit einer in Umfangsrichtung feststehenden kreisförmigen Innenwand (22) des Gehäuses (24) in einer abdichtenden Beziehung steht und
--- vor der Auslösung nahe einer sich zwischen der Nabe (21) und der Innenwand (22) erstreckenden Druckwand angeordnet ist und beim Auftreten von Druck im Druckraum (18) nach Auslösung der Druckquelle (17) unter Bewegung entlang der feststehenden Innenwand (22) und Drehung der mit dem Gurtaufrollmechanismus (12) drehfest gekuppelten zentralen Nabe (21) den Laufraum (19) um eine erhebliche Winkelstrecke durchläuft, wobei
-- die axialen Stirnseiten des Kräfte übertragenden Dichtmittels (20) der Nabe (21) und der Innenwand (22) mit Stirnwänden (25', 30), von denen vorzugsweise eine ein abnehmbarer Deckel ist, in dichtendem Eingriff stehen,
dadurch **gekennzeichnet,**
daß
- das Dichtmittel ein sich von einem innenverzahnten, mit seiner Umfangswand (31) an der Innenwand (22) des Gehäuses (24) gleitend anliegenden, zur Innenwand (22) konzentrischen Zahnrad (32) radial nach innen erstreckender Radialkolben (20) ist, der sich bis dicht an den Außenumfang der Nabe (21) erstreckt und diese gar nicht oder allenfalls reibend berührt, daß
- die Nabe (21) rundum mit einer Außenverzahnung (21') versehen ist, daß
- die Druckwand durch ein mit der Außenverzahnung (21') der Nabe (21) und der Innenverzahnung (32') des Zahnrades (32) kämmendes Ritzel (28') gebildet ist, welches drehbar am Gehäuse (24) befestigt ist, und daß
- der Druckraum (18) in Drehrichtung des Zahnrades (32) gesehen unmittelbar hinter dem Radialkolben (20) und vor dem Ritzel (28') stirnseitig in den Laufraum (19) mündet.

5. Gurtstraffer nach Anspruch 4,
dadurch **gekennzeichnet,**
daß ein Luft-Rückführkanal (26') in Drehrichtung des Zahnrades (32) gesehen unmittelbar hinter dem Ritzel (28') stirnseitig in den Laufraum (19) mündet.

6. Gurtstraffer nach Anspruch 4 oder 5,
dadurch **gekennzeichnet,**
daß die Durchmesser des Zahnrades (32), der Außenverzahnung (21') der Nabe (21) und des Ritzels (28') so gewählt sind, daß die Nabe (21) eine Winkelbewegung von von 500 bis 720° ausführen kann.

## Claims

1. Belt tensioner in safety belt arrangements in motor vehicles comprising a belt reeling mechanism (12) secured to the vehicle chassis (11) and preferably provided with a retraction spring arrangement (29) and an acceleration detection device, a drive (13) for the belt reeling mechanism (12) and operating in the belt reeling in direction, and an acceleration sensor (14) which responds to accelerations occurring during an accident and stands in triggering connection (15) with the drive (13) in such a way that on the occurrence of an acceleration caused by an accident, the drive (13) is triggered and the belt reeling mechanism (12) thereby abruptly reels in the belt by a predetermined amount which is sufficient to place the belt (16) firmly against the occupant held by it, with the drive having
- a pressure source (17), in particular a pyrotechnical charge, which can be triggered on the response of the acceleration sensor (14) and which abruptly builds up a high pressure in a pressure space (18) on being triggered,
- a substantially circular running chamber (19) which is connected or connectable at its start with the pressure space (18) and which is closed in an at least approximately pressure-tight manner, and in which
- a force transmitting sealing means (20) is arranged which
-- subdivides the running chamber (19) in the circumferential direction into two spaces which are separated from one another in pressure-ight manner, of which one is connected pressure-wise to the pressure space (18) and which,
-- at the latest directly after being triggered,
--- is movable over the periphery of the running chamber (19),
--- stands radially inwardly in engagement with a central hub (21), which is rotationally fixedly connected to the belt reeling mechanism (12) or can be rotationally fixedly coupled thereto at the latest directly after the triggering,
--- stands radially outwardly in a sealing relationship with a circular inner wall (22) of the housing (24) which is fixed in the peripheral direction, and
--- is arranged prior to triggering close to a pressure wall (28) extending between the hub (21) and the inner wall (22) and, on the occurrence of pressure in the pressure space (18) after the triggering of the pressure source (17), runs through the running chamber (19) around a considerable angular path while moving along the stationary inner wall (22) and with rotation of the central hub (21) which is rotationally fixedly coupled to the belt reeling mechanism (12), with
-- the axial end faces of the force transmitting sealing means (20) of the hub (21) and of the inner wall (22) standing in sealing engagement with end walls (25', 30), of which one is preferably a removable cover,
characterised in that
- the sealing means is a radial piston (20) secured to the hub (21) and extending close up to the inner wall (22) and either not contacting the latter or at most frictionally contacting the latter, in that
- the inner wall is formed around its periphery as an inner toothed ring (22); in that
- the hub (21) has an outer toothed arrangement (21') which stands in engagement with the inner toothed ring (22) via a planet gear (28) which meshes with the inner toothed ring (22) and the outer toothed arrangement (21'), which is freely rotatable, which is movable in the peripheral direction and which forms the pressure wall, in that
- the hub (21) is of axially hollow design, and in that
- the pressure space (18) is formed by a part of the axial hollow space of the hub (21), and - seen in the direction of rotation - opens behind the radial piston (20) and in front of the planetary gear (28) into the running chamber (19).

2. Belt tensioner in accordance with claim 1, characterised in that another part of the axial hollow cavity of the hub (21) of hollow design is formed as a return passage (26) for the air displaced on rotation of the radial piston (20) and - as seen in the direction of rotation - opens into the running chamber (19) in front of the radial piston (20).

3. Belt tensioner in accordance with claim 1 or claim 2, characterised in that the diameters of the inner toothed ring (22'), of the outer toothed ring (21') of the hub (21) and of the planetary gear (28) are so selected that the radial piston (20) can execute an angular movement of 460° to 720°.

4. Belt tensioner in safety belt arrangements in motor vehicles comprising a belt reeling mechanism (12) secured to the vehicle chassis (11) and preferably provided with a retraction spring arrangement (29) and an acceleration detection device, a drive (13) for the belt reeling mechanism (12) and operating in the belt reeling in direction, and an acceleration sensor (14) which responds to accelerations occurring during an accident and stands in triggering connection (15) with the drive (13) in such a way that on the occurrence of an acceleration caused by an accident, the drive (13) is triggered and the belt reeling mechanism (12) thereby abruptly reels in the belt by a predetermined amount which is sufficient to place the belt (16) firmly against the occupant held by it, with the drive having
- a pressure source (17), in particular a pyrotechnical charge, which can be triggered on the response of the acceleration sensor (14) and which abruptly builds up a high pressure in a pressure space (18) on being triggered,
- a substantially circular running chamber (19) which is connected or connectable at its start with the pressure space (18) and which is closed in an at least approximately pressure-tight manner, and in which
- a force transmitting sealing means (20) is arranged which
-- subdivides the running chamber (19) in the circumferential direction into two spaces which are separated from one another in pressure tight manner, of which one is connected pressure-wise to the pressure space (18) and which
-- at the latest directly after being triggered
--- is at least movable over the periphery of the running chamber (19),
--- stands radially inwardly in a sealing relationship with a central hub (21), which is rotationally fixedly connected to the belt reeling mechanism (12) or can be rotationally fixedly coupled thereto at the latest directly after the triggering, and
--- stands radially outwardly in a sealing relationship with a circular inner wall (22) of the housing (24) which is fixed in the peripheral direction, and
--- is arranged prior to triggering close to a pressure wall extending between the hub (21) and the inner wall 22 and, on the occurrence of pressure in the pressure space (18) after the triggering of the pressure source (17), runs through the running chamber (19) through a considerable angular path while moving along the stationary inner wall (22) and with rotation of the central hub (21) which is rotationally fixedly coupled to the belt reeling mechanism (12), with
-- the axial end faces of the force transmitting sealing means (20) of the hub (21) and of the inner wall (22) standing in sealing engagement with end walls (25', 30), of which one is preferably a removable cover,
characterised in that
- the sealing means is a radial piston (20) which extends radially inwardly from an inner toothed gear (32) which is concentric to the inner wall (22) and the peripheral wall (31) of which slidingly contacts the inner wall (22) of the housing (24), with the radial piston extending closely up to the outer periphery of the hub (21) and either not contacting the latter or at most frictionally contacting it; in that
- the hub (21) is provided with an outer toothed arrangement (21') around it, in that
- the pressure wall is formed by a pinion (28') which meshes with the outer toothed arrangement (21') of the hub (21) and the inner toothed arrangement (32') of the gear (32) and is rotatably secured to the housing (24); and in that
- the pressure space (18) opens into the running space (19) at the end face directly behind the radial piston (20) and in front of the pinion (28') when seen in the direction of rotation of the gear (32).

5. Belt tensioner in accordance with claim 4, characterised in that an air return passage (26') opens at an end face into the running space (19) directly behind the pinion (28') when seen in the direction of rotation of the gear (32).

6. Belt tensioner in accordance with claim 4 or claim 5, characterised in that the diameter of the gear (32), the outer toothed arrangement (21') of the hub (21) and of the pinion (28') are so selected that the hub (21) can execute an angular movement of from 500 to 720°.

## Revendications

1. Dispositif prétensionneur dans des agencements de ceinture de sécurité dans des véhicules automobiles, qui comprend un mécanisme d'enroulement de ceinture (12), fixé sur le châssis de véhicule et de préférence pourvu d'un agencement à ressort de rappel (29) et d'un dispositif de détection d'accélération, un entraînement (13), fonctionnant dans la direction d'enroulement de ceinture, pour le mécanisme d'enroulement de ceinture (12), et un détecteur d'accélération (14) qui réagit aux accélérations qui se produisent lors d'un accident et qui se trouve en relation de déclenchement (15) avec l'entraînement (13), de manière que lors de l'apparition d'une accélération produite lors d'un accident l'entraînement (13) est déclenché et le mécanisme d'enroulement de ceinture (12) enroule de ce fait brutalement la ceinture d'une valeur prédéterminée, qui suffit à appliquer la ceinture (13) fermement contre le passager tenu par cette ceinture, dans lequel l'entraînement comprend :
- une source de pression (17) susceptible d'être déclenchée lors de la réaction du détecteur d'accélération (14), particulier une charge pyrotechnique qui développe brutalement une pression élevée dans une chambre de pression (18) lors du déclenchement,
- une chambre de déplacement (19) sensiblement circulaire, reliée ou susceptible d'être reliée à la chambre de pression (18) à son commencement, et refermée de manière au moins approximativement étanche à la pression,
- des moyens d'étanchéité (20) agencés dans ladite chambre de déplacement, et assurant la transmission de forces, lesquels moyens d'étanchéité :
-- subdivisent la chambre de déplacement (19) en direction périphérique en deux chambres séparées l'une de l'autre de manière étanche à la pression, l'une des chambres étant reliée en pression à la chambre de pression (18), et
-- au plus tard immédiatement après le déclenchement
--- sont susceptibles de se déplacer sur la périphérie de la chambre de déplacement (19),
--- se trouvent en engagement radialement à l'intérieur avec un moyeu central (21) accouplé solidairement en rotation au mécanisme d'enroulement de ceinture (12), ou susceptible d'être accouplé solidairement en rotation au plus tard immédiatement après le déclenchement,
--- se trouvent dans une relation d'étanchement radialement à l'extérieur avec une paroi intérieure (22) circulaire, fixe en direction périphérique, du boîtier (24), et
--- sont agencés avant le déclenchement à proximité d'une paroi pression (28) qui s'étend entre le moyeu (21) et la paroi intérieure (22), et, par déplacement le long de la paroi intérieure fixe (22) et par rotation du moyeu central (21) accouplé solidairement en rotation au mécanisme d'enroulement de ceinture (12), traversent la chambre de déplacement (19) sur un trajet angulaire important lors de l'apparition d'une pression dans la chambre de pression (18) après déclenchement de la source de pression (17),
-- les parois frontales axiales des moyens d'étanchéité (20) qui transmettent les forces, du moyeu (21), et de la paroi intérieure (22) étant en engagement étanche avec des parois frontales (25', 30), dont l'une est de préférence un couvercle amovible,
caractérisé en ce que
- les moyens d'étanchéité sont constitués par un piston radial (20) fixé au moyeu (21), ledit piston s'étendant jusqu'à proximité immédiate de la paroi intérieure (22), sans être en contact avec celle-ci ou tout au plus un contact de friction,
- la paroi intérieure est réalisée sur tout le pourtour sous forme d'une couronne dentée intérieure (22),
- le moyeu (21) comporte une denture extérieure (21') qui est en engagement avec la couronne dentée intérieure (22) par l'intermédiaire d'une roue dentée planétaire (28), qui engrène avec la couronne dentée intérieure (22) et la denture extérieure (21'), qui est en rotation libre et en déplacement en direction périphérique, et qui forme la paroi de pression,
- le moyeu (21) est réalisé de manière creuse en direction axiale, et
- la chambre de pression (18) est formée par une partie de la cavité axiale du moyeu (21) et débouche dans la chambre de déplacement (19) derrière le piston radial (20) et devant la roue dentée planétaire (28), vue en direction de rotation.

2. Dispositif prétensionneur selon la revendication 1, caractérisé en ce qu'une autre partie de la cavité axiale du moyeu (21) réalisé creux, est formée comme canal de retour (26) pour l'air repoussé lors du déplacement du piston radial (20), ledit canal débouchant dans la chambre de déplacement (19) devant le piston radial (20), vu en direction de rotation.

3. Dispositif prétensionneur selon l'une ou l'autre des revendications 1 et 2, caractérisé en ce que les diamètres de la couronne dentée intérieure (22'), de la denture extérieure (21') du moyeu (21), et de la roue dentée planétaire (28) sont choisis de telle manière que le piston radial (20) peut décrire un mouvement angulaire de 460° à 720°.

4. Dispositif prétensionneur dans des agencements de ceinture de sécurité dans des véhicules automobiles, qui comprend un mécanisme d'enroulement de ceinture (12), fixé sur le châssis de véhicule et de préférence pourvu d'un agencement à ressort de rappel (29) et d'un dispositif de détection d'accélération, un entraînement (13), fonctionnant dans la direction d'enroulement de ceinture, pour le mécanisme d'enroulement de ceinture (12), et un détecteur d'accélération (14) qui réagit aux accélérations qui se produisent lors d'un accident et qui se trouve en relation de déclenchement (15) avec l'entraînement (13), de manière que lors de l'apparition d'une accélération produite lors d'un accident l'entraînement (13) est déclenché et le mécanisme d'enroulement de ceinture (12) enroule de ce fait brutalement la ceinture d'une valeur prédéterminée, qui suffit à appliquer la ceinture (13) fermement contre le passager tenu par cette ceinture, dans lequel l'entraînement comprend :
- une source de pression (17) susceptible d'être déclenchée lors de la réaction du détecteur d'accélération (14), particulier une charge pyrotechnique qui développe brutalement une pression élevée dans une chambre de pression (18) lors du déclenchement,
- une chambre de déplacement (19) sensiblement circulaire, reliée ou susceptible d'être reliée à la chambre de pression (18) à son commencement, et refermée de manière au moins approximativement étanche à la pression,
- des moyens d'étanchéité (20) agencés dans ladite chambre de déplacement, et assurant la transmission de forces, lesquels moyens d'étanchéité :
-- subdivisent la chambre de déplacement (19) en direction périphérique en deux chambres séparées l'une de l'autre de manière étanche à la pression, l'une des chambres étant reliée en pression à la chambre de pression (18), et
-- au plus tard immédiatement après le déclenchement
--- sont susceptibles de se déplacer sur la périphérie de la chambre de déplacement (19),
--- se trouvent en engagement radialement à l'intérieur avec un moyeu central (21) accouplé solidairement en rotation au mécanisme d'enroulement de ceinture (12), ou susceptible d'être accouplé solidairement en rotation au plus tard immédiatement après le déclenchement,
--- se trouvent dans une relation d'étanchement radialement à l'extérieur avec une paroi intérieure (22) circulaire, fixe en direction périphérique, du boîtier (24), et
--- sont agencés avant le déclenchement à proximité d'une paroi pression (28) qui s'étend entre le moyeu (21) et la paroi intérieure (22), et, par déplacement le long de la paroi intérieure fixe (22) et par rotation du moyeu central (21) accouplé solidairement en rotation au mécanisme d'enroulement de ceinture (12), traversent la chambre de déplacement (19) sur un trajet angulaire important lors de l'apparition d'une pression dans la chambre de pression (18) après déclenchement de la source de pression (17),
-- les parois frontales axiales des moyens d'étanchéité (20) qui transmettent les forces, du moyeu (21), et de la paroi intérieure (22) étant en engagement étanche avec des parois frontales (25', 30), dont l'une est de préférence un couvercle amovible,
caractérisé en ce que
- les moyens d'étanchéité sont constitués par un piston radial (20) qui s'étend radialement vers l'intérieur depuis une roue dentée (32) à denture intérieure, concentrique à la paroi intérieure (22) du boîtier (24) et en contact de coulissement par sa paroi extérieure (31) contre ladite paroi intérieure (22) du boîtier, lequel piston s'étend jusqu'à proximité immédiate de la périphérie extérieure du moyeu (21) sans contact avec celle-ci, ou tout au plus tard un contact de friction,
- le moyeu (21) est doté sur tout le pourtour d'une denture extérieure (21'),
- la paroi extérieure est formée par un pignon (28'), qui engrène avec la denture extérieure (21') du moyeu (21) et avec la denture intérieure (32') de la roue dentée (32), et qui est fixé avec faculté de rotation sur le boîtier (24), et
- la chambre de pression (18) débouche dans la chambre de déplacement (19) du côté frontal immédiatement derrière le piston radial (20) et devant le pignon (28'), vue en direction de rotation de la roue dentée (32).

5. Dispositif prétensionneur selon la revendication 4, caractérisé en ce qu'un canal de retour d'air (26') débouche du côté frontal dans la chambre de déplacement (19) immédiatement derrière le pignon (28'), vu en direction de rotation de la roue dentée (32).

6. Dispositif prétensionneur selon l'une ou l'autre des revendications 4 et 5, caractérisé en ce que les diamètres de la roue dentée (32), de la denture extérieure (21') du moyeu (21) et du pignon (28') sont choisis de telle manière que le moyeu (21) peut décrire un mouvement angulaire de 500 à 720°.
